# EUROPEAN PATENT SPECIFICATION

(11) **EP 0 803 392 B1**
(45) Date of publication and mention of the grant of the patent: **11.09.2002**
(21) Application number: 97201189.4
(22) Date of filing: 24.04.1997
(51) Int. Cl.: B60J 10/02, B60J 10/08, B60R 13/04

(54) **Mobile accommodation, and sealing profile for an opening in a wall thereof**
Mobile Unterkunft und Dichtungsprofil für eine Wandöffnung
Logement mobile et profil d'étanchéité pour une ouverture dans un mur

(30) Priority: 25.04.1996 NL 1002942
(43) Date of publication of application: 29.10.1997
(73) Proprietor: POLYPLASTIC B.V., 3044 CK Rotterdam (NL)
(72) Inventor: 't Hoen, Jan, 3123 CN Schiedam (NL)
(74) Representative: Jilderda, Anne Ayolt

(56) References cited:
- EP-A- 0 414 302
- EP-A- 0 500 058
- CH-A- 480 571
- DE-U- 8 902 836
- FR-A- 1 505 136
- GB-A- 660 762

## Description

The invention relates to a mobile accommodation, such as a caravan, camper, boat, yacht, and the like, comprising at least one wall with an opening which is provided with a panel capable of being opened, such as a window or a door, said opening being provided substantially circumferentially with a sealing profile which grips around the wall of the accommodation with a flexible cheek on either side, in which the wall comprises a stacked assembly of a comparatively thick foamed intermediate layer which lies enclosed between two comparatively thin shells.

Although it will be clear from the above that the invention is applicable in principle to any kind of panel which is capable of being opened, i.e. not only a window but also, for example, a door or a different kind of panel such as, for example, a luggage hatch, the following text will often merely refer to a window and a window opening for the sake of brevity, but the scope of the invention should by no means be considered limited thereto, except where this is expressly stated.

The wall of such an accommodation usually comprises a comparatively hard outer shell of aluminium or a suitable synthetic resin, and a more decorative inner shell which is usually made of wood or synthetic resin. The two shells maintain a certain distance to one another so as to enclose a cavity between them which provides the desired heat insulation. The cavity may for this purpose be additionally filled with a suitable insulating material such as polystyrene or rock wool.

In a conventional manufacturing process, for example, the outer shell is laid on a flat base surface and a framework, usually made of wood, is provided on this shell. This framework leaves open the positions of the openings to be formed for windows and may or may not be filled up with insulation panels. Then the other shell is provided and glued to the framework, whereupon the openings are sawn from the wall in the locations reserved for this in the framework. The window openings are accordingly bounded by parts of the framework, which at the same time offer a sufficiently strong hold for mounting the necessary hinges and locks for the window.

Increasingly, a trend may be observed away from this rather traditional manufacturing method towards so-called full-foam walls. A previous European patent application by applicant, number EP-A-414.302, gives an example of a mobile living quarter with such full foam walls. The wooden framework between the shells of the wall is dispensed with here, the cavity between the shells being entirely filled with foam, for example polyurethane. The openings for the doors, windows and any other panels, if present, are not provided therein until in the very final stage. The advantages of such a wall are many. Not only does it achieve an optimum degree of filling with insulating material, but more importantly, the exact position of the doors, windows, and other panels to be provided in the wall can still be adapted to the specific type of accommodation to be manufactured or to specific customer's wishes up to the final mounting stage of the wall. The stock of finished walls can be substantially reduced as a result of this, which represents a major business advantage. The expenses and labour involved in the mounting of a wooden framework, which is a comparatively labour-intensive job, are eliminated.

Full-foam walls, however, also have a disadvantage in that any hinges and locks for providing an opening possibility for a panel can no longer be fastened in a wooden framework, as in the traditional manufacturing method, while the foam filling will in general offer an insufficiently secure fastening base for anchoring the hinges and locks therein.

The invention has for its object to provide a mobile accommodation of the kind mentioned in the opening paragraph which retains the advantages of full-foam walls and offers a fastening base for any hinges and locks.

According to the invention, a mobile accommodation of the kind mentioned in the opening paragraph is for this purpose characterized in that the sealing profile comprises a reinforced back which is provided with at least one reinforcement body which extends over at least part of the length of the sealing profile and in that a part of hinges and locks associated with said panel is affixed to said reinforcement body. The basic material here is a full-foam wall, so that the advantages attached thereto are realized. Finishing of the openings therein with sealing profiles which are each provided with a reinforced back, however, adds to this a fastening base for any hinges and locks, i.e. the latter can now be screwed or otherwise fastened into the reinforcement body in the back of the profile.

It is noted that Swiss patent application CH-A-480.571 in itself discloses a reinforced sealing profile intended to improve the sealing of a truck door or otherwise between two bodies, one having a metal edge to receive the sealing. There is, however, no indication whatsoever in this reference that the application of such a profile could beneficially be used in a mobile living quarter of the kind of the present application. No suggestion is made that the sealing profile could be used as a support for mounting locks and hinges associated with a movable panel.

To prevent the possibility of the window complete with its sealing profile being lifted from the opening afterwards, a preferred embodiment of the mobile accommodation according to the invention is characterized in that the reinforcement body comprises a U-profile whose legs grip over both sides of the wall of the accommodation. The U-legs of the reinforcement body thus anchor the sealing profile plus any hinges and locks fastened thereto in the opening, so that the accommodation is resistant to all weather conditions.

To provide the necessary flexibility, especially in the usually rounded corners of the window opening, a further preferred embodiment of the mobile accommodation according to the invention is characterized in that the legs of the reinforcement body are incised transversely to their longitudinal direction at least in the comers of the opening. The incisions render it possible for the reinforcement body to lie seamlessly against the inner edge of the opening also in the corners thereof.

In a special embodiment, the mobile accommodation according to the invention is characterized in that the reinforcement body lies substantially completely embedded in the remaining portion of the sealing profile. Not only is this desirable for aesthetic reasons, because the reinforcement body can thus be completely hidden from view, but the reinforcement body now also lies fully protected against external (weather) influences. In the case of a metal reinforcement body, in particular, corrosion and other degenerative processes can thus be counteracted.

In a practical embodiment, the mobile accommodation according to the invention is characterized in that the sealing profile comprises a rubbery sheath which was extruded around a rigid core, said core forming the reinforcement body. The profile can thus be manufactured in a fully continuous process in which on the one hand the comparatively rigid core is guided into the extrusion chamber in the form of a continuous profile and on the other hand the rubbery material for the sheath is continuously injected around it.

The invention will now be explained in more detail with reference to an embodiment and an accompanying drawing, in which
- Figs. 1A and 1B: are cross-sectional views of part of the wall of a mobile accommodation with a window opening in a first and a second embodiment of the invention, respectively, and
- Fig. 2: is a front elevation, partly cut away, of part of a wall with a window opening of the second embodiment of the mobile accommodation according to the invention as shown in Fig. 1B.

The Figures are purely diagrammatical and not drawn true to scale. Some dimensions have been (strongly) exaggerated for the sake of clarity. Corresponding parts have generally been given the same reference numerals in the Figures.

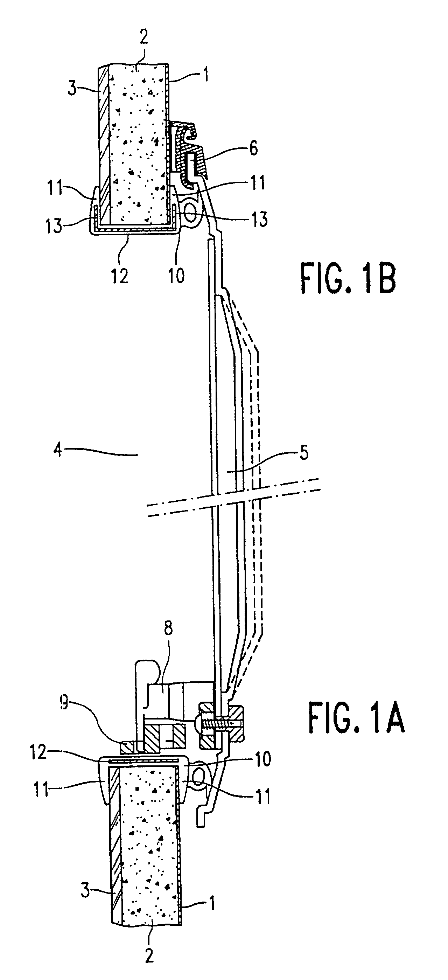

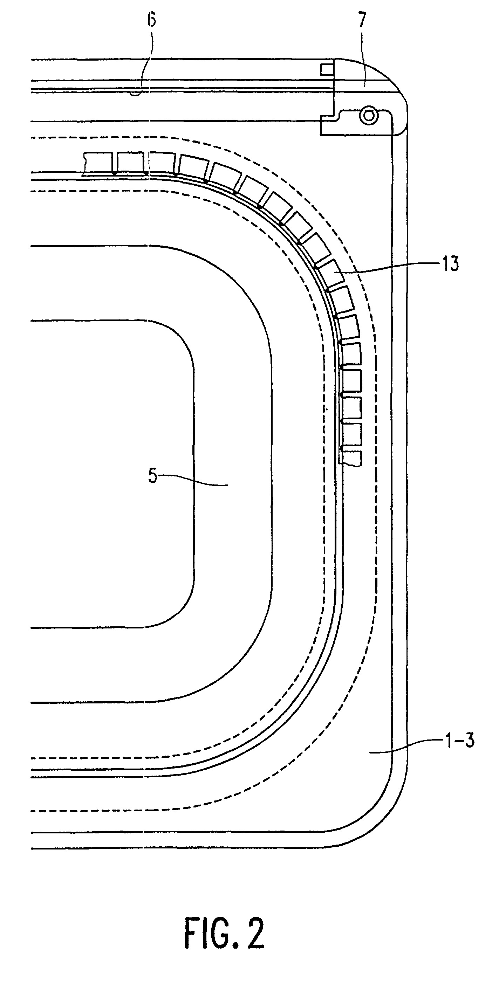

The mobile accommodation shown in Figs. 1A and 1B, a caravan in this case, comprises a wall consisting of a stacked assembly of a comparatively thick foamed intermediate layer 2 enclosed between a comparatively thin outer shell 1, for example made of aluminium, polyester, or any other weather-resistant material, and a comparatively thin inner shell 3 which is usually made from wood or is provided with a wood finish for reasons of appearance, but which may obviously be made from any material as desired within the scope of the invention. The foam filling 2 not only serves to provide the necessary heat insulation but also gives the wall its mechanical stability. A suitable foam material for this purpose is, for example, polyurethane, but alternative foam materials, whether or not of the synthetic resin type, are suitable for use within the scope of the invention. An opening 4 is provided in the wall for accommodating a panel capable of being opened, in the present case a double-walled window. The window 5 is hinged to a hinge profile 6 which is provided at the upper side of the window over substantially the entire width thereof. The hinge profile may be bounded on either side by end pieces 7, see Fig. 2, which provide not only the required end finish but also a fixation of the window 5.

To achieve the necessary wind- and watertightness, the inner rim of the window opening 4 is circumferentially sealed off with a substantially U-shaped sealing profile 10 which grips around the wall 1..3 of the accommodation with a flexible cheek 11 on either side. The profile 10 comprises, for example, a rubber, natural or otherwise, neoprene, EPDM, or any other suitable thermoplastic elastomer. According to the invention, the back of the profile 10 is provided with at least one reinforcement body 12, which in this case lies fully embedded as a core inside a rubber sheath 10. The sheath 10 was for this purpose extruded around the reinforcement body 12 in an extrusion process which is known per se.

The reinforcement body 12 is comparatively rigid, i.e. in this example manufactured from a metal strip, for example aluminium. Within the scope of the invention, however, an alternative material such as wood or a suitable synthetic material may also be used for the body 12, and this body may or may not be embedded in the remaining portion of the profile 10, or may be fastened thereto externally. It is also possible for one or several loose reinforcement bodies to be used which are applied in or against the back of the sealing profile, instead of a single reinforcement body 12 which, as in the present example, extends as a continuous core inside the profile 10-12.

The reinforced back 12 of the sealing profile 10-12 bears at least substantially on the inner rim of the opening and thus offers a base for fastening of the hinges and locks necessary for opening the window 5, such as the latch 8 with the latch stop 9 shown in the Figure and window bars mounted outside the drawing. The latch 8 is here fastened to the window 5, and the latch stop 9 is securely screwed or otherwise fixed (in)to the reinforcement body. The intermediate foam layer 2 on its own would provide an insufficient hold for achieving an adequate fastening of the hinges and locks. The invention, however, eliminates this drawback in a simple manner.

Although the construction of Fig. 1A ought to be sufficient under normal circumstances and has indeed proved to be so in practice, the possibility cannot be excluded that the window, possibly complete with the substantially flexible profile 10-12 and the hinges and locks fastened thereto, is lifted from its opening 4 under exceptionally severe weather conditions and in heavy storms, or under the influence of a pressure exerted, whether or not intentionally, on the window. To prevent this, the reinforcement body in the embodiment of Figs. 1B and 2 comprises a U-profile with two legs 13 which grip over the wall 1..3 of the accommodation on either side. Here, too, the reinforcement body is fully embedded in the material of the remaining portion of the sealing profile. The legs 13 of the reinforcement body are incised transversely to the longitudinal direction of the profile at least in the rounded comers of the opening so that they can bear seamlessly on these comers. The legs 13 as a result comprise individual segments mutually separated by incisions which allow of a bending of the otherwise rigid reinforcement body. The legs 13 of the reinforcement body thus anchor the sealing profile to the wall of the accommodation, so that it can withstand even an exceptionally high load.

Although the invention was explained in detail above with reference to only these embodiments, it will be obvious that the invention is by no means limited thereto. On the contrary, many more variations and designs will be possible to those skilled in the art without departing from the scope of the invention as defined in the appended claims, many of which will become apparent from the appended claims.

## Claims

1. A mobile accommodation comprising at least one wall (1..3) with an opening (4) which is provided with a panel (5) capable of being opened, such as a window or a door, said opening being provided substantially circumferentially with a sealing profile (10) which grips around the wall of the accommodation with a flexible cheek on either side, in which the wall comprises a stacked assembly of a comparatively thick foamed intermediate layer (2) which lies enclosed between two comparatively thin shells (1,3), **characterized in that** the sealing profile comprises a reinforced back which is provided with at least one reinforcement body (12,13) which extends over at least part of the length of the sealing profile and **in that** a part of hinges and locks (9) associated with said panel is affixed to said reinforcement body.

2. A mobile accommodation as claimed in Claim 1, **characterized in that** the reinforcement body (12,13) comprises a U-profile whose legs (13) grip over both sides of the wall (1..3) of the accommodation.

3. A mobile accommodation as claimed in Claim 2, **characterized in that** the legs of the reinforcement body are incised transversely to their longitudinal direction at least in the corners of the opening.

4. A mobile accommodation as claimed in Claim 1, 2 or 3, **characterized in that** the reinforcement body is made from metal.

5. A mobile accommodation as claimed in Claim 4, **characterized in that** the reinforcement body comprises aluminium.

6. A mobile accommodation as claimed in any one or several of the preceding Claims, **characterized in that** the reinforcement body lies substantially completely embedded in the remaining portion of the sealing profile (10).

7. A mobile accommodation as claimed in Claim 6, **characterized in that** the sealing profile comprises a rubbery sheath which was extruded around a rigid core, said core forming the reinforcement body.

## Patentansprüche

1. Mobile Unterkunft umfassend wenigstens eine Wand (1...3) mit einer Öffnung (4), die mit einer zu öffnenden Blende (5), wie etwa einem Fenster oder einer Tür, versehen ist, wobei die Öffnung im wesentlichen umfangsmäßig mit einem Dichtungsprofil (10) versehen ist, das die Wand der Unterkunft mit einer flexiblen Wange auf jeder Seite umgreift, wobei die Wand eine geschichtete Anordnung aus einer relativ dicken geschäumten Zwischenschicht (2) aufweist, die zwischen zwei relativ dünnen Außenschichten (1, 3) eingeschlossen ist, **dadurch gekennzeichnet, daß** das Dichtungsprofil einen verstärkten Rücken aufweist, der wenigstens mit einem Verstärkungskörper (12, 13) versehen ist, der sich wenigstens über einen Teil der Länge des Dichtungsprofils erstreckt und daß ein Riegelteil (9) mit der Blende zusammenhängt, das an dem Verstärkungskörper befestigt ist.

2. Mobile Unterkunft nach Anspruch 1, **dadurch gekennzeichnet, daß** der Verstärkungskörper (12, 13) ein U-Profil aufweist, dessen Beine (13) die beiden Seiten der Wand (1...3) der Unterkunft umschließen.

3. Mobile Unterkunft nach Anspruch 2, **dadurch gekennzeichnet, daß** die Beine des Verstärkungskörpers quer zu ihrer Längsrichtung wenigstens an den Ecken der Öffnung eingeschnitten sind.

4. Mobile Unterkunft nach Anspruch 1, 2 oder 3, **dadurch gekennzeichnet, daß** der Verstärkungskörper aus Metall besteht.

5. Mobile Unterkunft nach Anspruch 4, **dadurch gekennzeichnet, daß** der Verstärkungskörper Aluminium aufweist.

6. Mobile Unterkunft nach irgendeinem der vorhergehenden Ansprüche, **dadurch gekennzeichnet, daß** der Verstärkungskörper weitgehend vollständig in den übrigen Teil des Dichtungsprofils (10) eingebettet ist.

7. Mobile Unterkunft nach Anspruch 6, **dadurch gekennzeichnet, daß** das Dichtungsprofil ein Gummiaußenteil aufweist, das um einen starren Kern extrudiert wurde, wobei der Kern den Verstärkungskörper bildet.

## Revendications

1. Arrangement mobile, comprenant au moins une paroi (1...3) ayant une ouverture (4) formée dans un panneau (5) qui peut être ouvert, tel qu'une fenêtre ou une porte, l'ouverture ayant en direction pratiquement circonférentielle un profilé d'étanchéité (10) qui s'accroche autour de la paroi de l'arrangement avec une joue flexible de part et d'autre, dans lequel la paroi comporte un ensemble empilé d'une couche intermédiaire de mousse relativement épaisse (2) qui est enfermée entre deux enveloppes relativement minces (1, 3), **caractérisé en ce que** le profilé d'étanchéité comporte un organe arrière armé qui possède au moins un corps d'armature (12, 13) qui s'étend sur une partie au moins de la longueur du profilé d'étanchéité, et **en ce qu'**une partie des articulations et verrous (9) associés au panneau est fixée au corps d'armature.

2. Arrangement mobile selon la revendication 1, **caractérisé en ce que** le corps d'armature (12, 13) comporte un profilé en U dont les branches (13) s'accrochent sur les deux côtés de la paroi (1...3) de l'arrangement.

3. Arrangement mobile selon la revendication 2 **caractérisé en ce que** les branches du corps d'armature sont incisées transversalement à leur direction longitudinale au moins aux coins de l'ouverture.

4. Arrangement mobile selon la revendication 1, 2 ou 3, **caractérisé en ce que** le corps d'armature est formé d'un métal.

5. Arrangement mobile selon la revendication 4, **caractérisé en ce que** le corps d'arrangement est formé d'aluminium.

6. Arrangement mobile selon une ou plusieurs des revendications précédentes, **caractérisé en ce que** le corps d'armature est enrobé pratiquement en totalité dans la partie restante du profilé d'étanchéité (10).

7. Arrangement mobile selon la revendication 6, **caractérisé en ce que** le profilé d'étanchéité comporte une gaine caoutchouteuse qui a été extrudée autour d'une âme rigide, l'âme formant le corps d'armature.
